# EUROPEAN PATENT APPLICATION

(11) **EP 4 102 593 A1**
(43) Date of publication of application: **14.12.2022**
(21) Application number: 22746147.2
(22) Date of filing: 19.01.2022
(51) Int. Cl.: H01M 4/04, H01M 4/62, H01M 4/66, H01M 4/139, H01M 4/13

(54) **FREE-STANDING FILM FOR DRY ELECTRODE, MANUFACTURING APPARATUS THEREOF, DRY ELECTRODE INCLUDING SAME, AND SECONDARY BATTERY**

(30) Priority: 27.01.2021 KR 20210011773; 13.01.2022 KR 20220005069
(71) Applicant: LG Energy Solution, Ltd., Seoul 07335 (KR)
(72) Inventor: KIM, Taegon, Daejeon 34122 (KR); KIM, Jeonggil, Daejeon 34122 (KR); KIM, Myeongsoo, Daejeon 34122 (KR)
(74) Representative: Goddar, Heinz J.
(86) International application number: PCT/KR2022/000986
(87) International publication number: WO 2022/164120

(57) **Abstract**

According to one embodiment of the present disclosure, a free-standing film for dry electrode, comprising: a binder, an active material and a conductive material,
wherein the free-standing film has a tensile strength of 2000 gf/cm² or more based on a thickness of 200 *µ*m.

## Description

### [TECHNICAL FIELD]

### Cross Citation with Related Application(s)

This application claims the benefit of Korean Patent Application No. 10-2021-0011773 filed on January 27, 2021 and Korean Patent Application No. 10-2022-0005069 filed on January 13, 2022 in the Korean Intellectual Property Office, the contents of which are incorporated herein by reference in their entirety.

The present disclosure relates to a free-standing film for dry electrode, a manufacturing apparatus thereof, a dry electrode including the same, and a secondary battery

### [BACKGROUND]

Due to the rapid increase in the use of fossil fuels, the demand for the use of alternative energy or clean energy is increasing, and as a part thereof, the fields that are being studied most actively are the fields of power generation and power storage using electrochemistry.

Currently, a secondary battery is a representative example of an electrochemical device that utilizes such electrochemical energy, and the range of use thereof tends to be gradually expanding.

Among these secondary batteries, a typical lithium secondary battery is being used not only as an energy source for mobile devices, but also as a power source for an electric vehicle and a hybrid electric vehicle which can replace a vehicle using fossil fuels such as a gasoline vehicle and a diesel vehicle, which are one of the main causes of air pollution. The area of use is being expanded even in applications such as electric power auxiliary power source through grid formation.

The manufacturing process of such a lithium secondary battery is largely divided into three processes: an electrode process, an assembly process, and a formation process. The electrode process is again divided into an active material mixing process, an electrode coating process, a drying process, a rolling process, a slitting process, a winding process, and the like.

Among them, the active material mixing process is a process of mixing a coating material for forming an electrode active layer in which an actual electrochemical reaction occurs in the electrode. Specifically, it is prepared in the form of a slurry having fluidity by mixing an electrode active material that is an essential element of an electrode, a conductive material and a filler that are other additives, a binder for binding between particles and adhering to a current collector, a solvent for imparting viscosity and dispersing particles, and the like.

The composition mixed for forming the electrode active layer in this way is also referred to as an electrode mixture in a broad sense.

After that, an electrode coating process of applying the electrode mixture onto an electrically conductive current collector, and a drying process of removing the solvent contained in the electrode mixture are performed, and additionally, the electrode is rolled and manufactured to a predetermined thickness.

Meanwhile, as the solvent contained in the electrode mixture evaporates during the drying process, defects such as pinholes or cracks may be induced in the pre-formed electrode active layer. Further, since the inside and outside of the active layer are not dried uniformly, the particle floating phenomenon occurs due to the difference in solvent evaporation speed, that is, the particles of the portion to be dried first may float up, and a gap may be formed with the portion to be dried relatively later, so that the electrode quality may be deteriorated. Particularly, in the case of thick-film coating, since it takes more time to evaporate the solvent when the electrode dries, and the floating phenomenon of the relatively light conductive material and binder is deepened, there is a fatal drawback that manufacture of a high-quality electrode is difficult.

Therefore, in order to solve the above problems, a drying device capable of adjusting the evaporation speed of the solvent while allowing the inside and outside of the active layer to be dried uniformly is being considered, but such drying devices are very expensive and require considerable cost and time to operate, which are disadvantageous in terms of the manufacturing processability.

Therefore, recently, active research has been carried out on the production of a dry electrode that does not use a solvent.

The dry electrode is generally manufactured by laminating a freestanding film produced in the form of a film containing an active material, a binder, a conductive material and the like, on a current collector.

Therefore, it is in the spotlight as an innovative technology that enables manufacture of a thick-film electrode high in quality, makes the use of an organic solvent harmful to the human body unnecessary, and simultaneously solves the high process costs due to a long drying.

Meanwhile, when manufacturing such a dry electrode, polytetrafluoroethylene (PTFE) powder is mainly used as a binder. In such a PTFE, a long fibrous structure having an atomic arrangement of (-CFε-CFε-)n is aligned one after another inside primary particles having a diameter of several hundred nm or less. When a shear force is applied under certain conditions, they is pulled out long into fibers, and such PTFE nanofibers play a role in connecting the active material and the conductive material like a rope to maintain the electrode morphology.

Meanwhile, since the mixture of the active material and the conductive material which fiberize the PTFE is greatly reduced in fluidity in the same state as chewing gum, it is difficult to supply a uniform quantity for rolling and calendering in order to manufacture in the form of a free-standing film, and it is not easy to uniformly control the rolling density during rolling and calendering.

Therefore, there is an urgent need to develop a free-standing film technology for manufacturing a dry electrode capable of solving these problems.

### [DETAILED DESCRIPTION OF THE INVENTION]

### [Technical Problem]

The present disclosure has been designed to solve the above-mentioned problems, and an object of the present disclosure is to provide a free-standing film with improved tensile strength.

Another object of the present disclosure is to provide an apparatus for manufacturing a free-standing film in which when preparing a fiberization composition through an extruder and then extruding it from the main body to the outside, quantitative extrusion can be performed by allowing the free-standing film to have a uniform density while minimizing the load, thus satisfying the above conditions.

Yet another object of the present disclosure is to provide a dry electrode comprising the free-standing film, and a secondary battery comprising the same.

### [Technical Solution]

According to one embodiment of the present disclosure, there is provided a free-standing film for dry electrode, comprising:
a binder, an active material and a conductive material,
wherein the free-standing film has a tensile strength of 2000 gf/cm² or more based on a thickness of 200 *µ*m.

At this time, the binder comprises a fiberizable polymer, and the fiberizable polymer may be polytetrafluoroethylene (PTFE).

More specifically, the free-standing film may have a tensile strength of 2000 gf/cm² to 4000 gf/cm² based on a thickness of 200 *µ*m.

Further, the free-standing film may have a thickness deviation of 0.5% or less based on a thickness of 200 *µ*m.

The free-standing film may have a thickness of 10 to 1000 *µ*m.

Meanwhile, according to another embodiment of the present disclosure, there is provided an apparatus for manufacturing the free-standing film, the apparatus comprising:
a main body that stores a solvent-free mixture containing a binder, an active material and a conductive material,
at least one extruder that mixes the solvent-free mixture to prepare a fiberization composition and extrudes it from the main body, and
a pair of preforming rolls that rotate in opposite directions in a state of facing each other and discharges the fiberization composition.

At this time, the binder may include a fiberizable polymer, and the fiberizable polymer is polytetrafluoroethylene (PTFE).

Meanwhile, the extruder may perform milling by rotation or mixing by blending, and apply a shear force to the solvent-free mixture to prepare a fiberization composition.

At this time, the extruder is not limited as long as it can mix the materials stored in the main body, apply pressure thereto, and discharge the materials from a main body to the outside as described above, and even an extruder having any structure can be used, but specifically, it may be a screw.

The preforming roll may be located at the end of the main body, and specifically located below the discharge port of the main body, so that the extruder can extrude the fiberization composition and simultaneously form it in a film form.

Meanwhile, the free-standing film manufacturing apparatus may further include a pre-mixer for mixing the binder, the active material, and the conductive material to form a solvent-free mixture, and a calender for calendering the fiberization composition molded in the form of a film by the preforming roll.

Meanwhile, according to another embodiment of the present disclosure, there is provided a dry electrode in which the free-standing film is laminated on a current collector coated with a primer layer, and specifically, there is provided a dry electrode in which a free-standing film manufactured using the free-standing film manufacturing apparatus is laminated on the current collector coated with the primer layer.

According to yet another embodiment of the present disclosure, there is provided a secondary battery comprising the dry electrode.

### [BRIEF DESCRIPTION OF THE DRAWINGS]

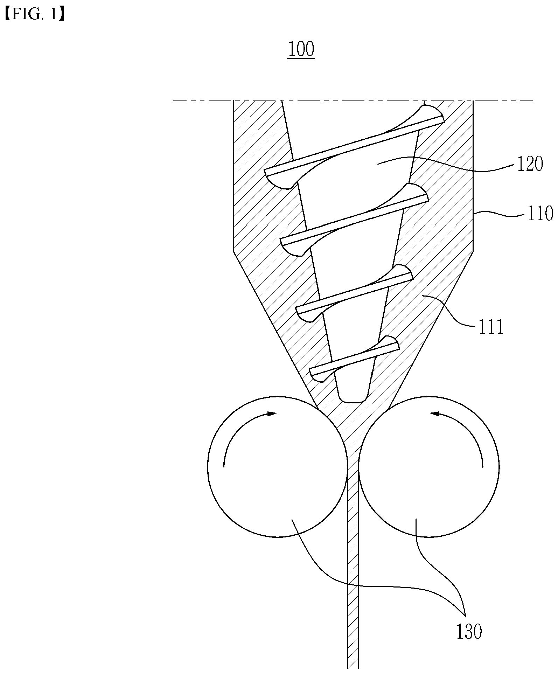

Fig. 1 is a schematic diagram of a free-standing film manufacturing apparatus according to the present disclosure.

### [DETAILED DESCRIPTION OF THE EMBODIMENTS]

Hereinafter, the present disclosure will be described in more detail for a better understanding of the present disclosure.

Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own disclosure in the best way.

The technical terms provided herein is merely used for the purpose of describing particular embodiments only, and is not intended to be limiting of the present disclosure. The singular forms "a," "an," and "the" are intended to include the plural forms as well, unless the context clearly indicates otherwise.

Further, throughout the specification, when a portion is referred to as "including" a certain component, it means that the portion can further include other components, without excluding the other components, unless otherwise stated.

According to one embodiment of the present disclosure, there is provided a free-standing film for dry electrode, comprising: a binder, an active material and a conductive material,
wherein the free-standing film has a tensile strength of 2000 gf/cm² or more based on a thickness of 200 *µ*m.

At this time, the binder includes a fiberizable polymer, and the fiberizable polymer may be polytetrafluoroethylene (PTFE).

The free-standing film may have a tensile strength of 2000 gf/cm² to 4000 gf/cm², specifically 2000gf/cm² to 3000gf/cm², most specifically 2200gf/cm² to 2700gf/cm² based on a thickness of 200 *µ*m.

Here, the tensile strength can be determined in which a free-standing film is cut and sampled into width 20mm × length 20mm × thickness 200 *µ*m, and the tensile strength (the maximum value of the force applied up to a time point where the sample does not break) is measured for the sample at an angle of 180 degrees and a speed of 50 mm/min using an UTM equipment (LLOYD Instruments Ltd.).

If the tensile strength is too low outside the above range, there is a problem of deterioration of processability in which the electrode is cut too easily in a continuous roll-to-roll process.

Also, the free-standing film may have a thickness deviation of 0.5% or less based on a thickness of 200 *µ*m.

The thickness deviation can be obtained by measuring the thickness of the free-standing film at 20 points at 1 cm intervals using an automatic thickness measuring instrument (Mahr, Millimar).

If the thickness deviation is large outside the above range, it is not possible to have a uniform density and thus, the defect rate increases, which causes a problem that life characteristics are deteriorated, which is not preferable.

The thickness of the free-standing film may be in the range of 10 *µ*m to 1000 *µ*m. Specifically, it may be 50 to 500 *µ*m, more specifically, 100 to 500 *µ*m.

That is, the free-standing film for a dry electrode according to the present disclosure can be manufactured to be relatively thick, which is suitable for manufacturing a thick-film electrode.

Meanwhile, such a free-standing film may be manufactured using a specific manufacturing apparatus as follows.

Specifically, according to another embodiment of the present disclosure, there is provided an apparatus for manufacturing the free-standing film, the apparatus comprising:
a main body that stores a solvent-free mixture containing a binder, an active material and a conductive material,
at least one extruder that mixes the solvent-free mixture to prepare a fiberization composition and extrudes it from the main body, and
a pair of preforming rolls that rotate in opposite directions in a state of facing each other and discharges the fiberization composition.

Fig. 1 schematically shows a part of a free-standing film manufacturing apparatus 100 according to the present disclosure.

Next, with reference to Fig. 1, the free-standing film manufacturing apparatus according to the present disclosure will be described along with the specific manufacturing method.

The free-standing film manufacturing apparatus 100 according to the present disclosure includes a main body 110 that stores a solvent-free mixture containing a binder, an active material and a conductive material, an extruder 120 that mixes a solvent-free mixture to prepare a fiberization composition 111, applies pressure to the fiberization composition 111 and extrudes the fiberization composition 111 from the main body to the outside, and a pair of preforming rolls 130 that rotate in opposite directions in a state of facing each other and discharges the fiberization composition 111.

Further, the solvent-free mixture including the binder, the active material and the conductive material may be formed by mixing the materials in a mixer.

Therefore, although not shown in Fig. 1, the free-standing film manufacturing apparatus 100 according to the present disclosure may further include the mixer. At this time, the mixer may be configured to collectively charge each material, and it may also be arranged in a configuration that divided charges so that the charging order can be controlled.

Mixing for preparing the mixture in the mixer is performed so that the active material, the conductive material, and the binder are uniformly distributed, and is mixed in a powder form. Therefore, it is not limited as long as it enables simple mixing thereof, and may be mixed by various methods. However, since the present disclosure is manufactured as a dry electrode that does not use a solvent, the mixing may be performed by a dry mixing method, and the mixing may be performed by charging the materials into a mixer such as a blender or a mill.

The mixing may be performed in a mixer at 5000 rpm to 20000 rpm for 30 seconds to 2 minutes, specifically, at 10000 rpm to 15000 rpm for 30 seconds to 1 minute in order to ensure uniformity. Further, if the heat generation problem of the equipment and the durability of the applicable material are ensured, the above mixing step can be repeated one or more times in order to improve the dispersibility in the dry mixing.

Meanwhile, the binder may include a fiberizable polymer, and the fiberizable polymer may be polytetrafluoroethylene (PTFE). The fiberizable polymer may be included in an amount of 50 wt% or more, or may be 100 wt%, based on the total weight of the binder.

Further, the binder may further include polyethylene oxide (PEO), polyvinylidene fluoride (PVdF), polyvinylidene fluoride-co-hexafluoropropylene (PVdF-HFP), acrylic binder, and the like, in addition to the polytetrafluoroethylene. In addition, it can further include other binders known in the art.

At this time, the composition of the binder may vary depending on whether the dry electrode is a positive electrode or a negative electrode.

Further, the type and composition of the active material can also differ depending on whether the dry electrode is a positive electrode or a negative electrode.

In order to manufacture a free-standing film for forming the dry positive electrode, the active material is not limited as long as it is in the form of lithium transition metal oxide, lithium metal iron phosphate, or metal oxide. For example, the active material may be a layered compound such as lithium cobalt oxide (LiCoO₂) or lithium nickel oxide (LiNiO₂) or a compound substituted with one or more transition metals; lithium manganese oxides such as chemical formula Li₁₊ₓMn₂₋ₓO₄ (where x is 0 to 0.33), LiMnO₃, Li₂MnO₃, LiMn₂O₃, LiMnO₂; lithium copper oxide (Li2Cu02); vanadium oxides such as LiV₃O₈, LiV₃O₄, V₂O₅, and Cu₂V₂O₇; a Ni-site type lithium nickel oxide represented by chemical formula LiNi₁₋ₓMₓO₂ (where M = Co, Mn, Al, Cu, Fe, Mg, Ca, Zr, Ti, B, P, W, Si, Na, K, Mo, V, Nb, Ru or Ga, and x = 0.01 to 0.3); lithium manganese composite oxide represented by chemical formula LiMn₂₋ₓMₓO₂ (where M = Co, Ni, Fe, Cr, Zn or Ta, and x = 0.01 to 0.1) or Li₂Mn₃MO₈ (where M = Fe, Co, Ni, Cu or Zn); LiMn₂O₄ with a Li portion of the chemical formula substituted with an alkaline earth metal ion; a disulfide compound; lithium metal phosphate LiMPO₄ (where M = Fe, CO, Ni, or Mn), a disulfide compound; Fe₂(MoO₄)₃ and the like, but is not limited thereto.

In order to manufacture a free-standing film for forming the dry negative electrode, the active material may include carbons such as hardly graphitizable carbon and graphite-based carbon, metal composite oxides such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, Group 1, 2, 3 elements in the periodic table, halogen; 0<x≤1; 1≤y≤3; 1≤z≤8); lithium metal; lithium alloys; silicon-based alloys; tin-based alloys; silicon-based oxides such as SiO, SiO/C, SiOₓ(1<x<2), SiO₂; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; Li-Co-Ni based materials, and the like.

However, the dry electrode may be, specifically, a positive electrode, whereby the active material for manufacturing the free-standing film may be, specifically, a positive electrode active material, and more specifically, lithium transition metal oxide, lithium nickel-manganese-cobalt oxide, oxides in which lithium nickel-manganese-cobalt oxides are partially substituted with different transition metals, lithium iron phosphate, or the like.

Meanwhile, in the case of a negative electrode using graphite as the main active material, it is not necessary to use a conductive material having a large specific surface area compared to the application of the positive electrode active material, or the use amount thereof can be greatly reduced. Therefore, it is easy to implement a dry electrode that fiberizes the PTFE binder compared to the positive electrode. However, generally, since the negative electrode material using the silicon-based active material has a relatively high capacity compared to the positive electrode material, and thus the thickness of the negative electrode is implemented thinner than that of the positive electrode in the electrode design, so that the difficulty in the process may increase in terms of manufacturing the free-standing film.

The conductive material is not particularly limited as long as it has high conductivity without causing a chemical change in the corresponding battery, and for example, graphite such as natural graphite and artificial graphite; graphene; active carbon; active carbon fiber; carbon blacks such as carbon black, acetylene black, ketjen black, channel black, furnace black, lamp black, and thermal black; conductive fibers such as carbon fiber and metal fiber; metal powders such as carbon fluoride, aluminum, and nickel; conductive whiskey such as zinc oxide and potassium titanate; conductive metal oxides such as titanium oxide; conductive materials such as polyphenylene derivatives may be used. Specifically, the conductive material may include at least one selected from the group consisting of active carbon, graphite, carbon black, graphene and single-walled or multi-walled carbon nanotubes for uniform mixing and improvement of conductivity, and more specifically, it may include carbon black or an active carbon.

The active material, the conductive material and the binder may be included in a weight ratio of 60 to 99.8 wt%: 0.1 to 20 wt%: 0.1 to 20 wt%, specifically, in a weight ratio of 80 to 99 wt%: 0.5 to 10 wt%: 0.5 to 10 wt%.

If the content of the binder is too high outside the above range, the binder becomes stiff while being excessively fiberized at a later time, whereby a load may be applied to the equipment on the process and the resistance to the electrode itself may be greatly increased. Meanwhile, if the content of the binder is too small, sufficient fiberization is not achieved, which may cause a problem that manufacture of a free-standing film is difficult or electrode physical properties such as electrode detachment are deteriorated.

If the content of the conductive material is too high outside the above range, the content of the active material is relatively reduced which may cause a problem that the volume is reduced, and the fiberization of PTFE may be hindered. On the contrary, if the content of the conductive material is too low, it may not be possible to ensure sufficient conductivity, or the physical properties of the electrodes of the free-standing film may be deteriorated, which is not preferable.

Meanwhile, in some cases, a filler, which is a component for suppressing the expansion of the electrode, may be further added to the mixture. The filler is not particularly limited as long as it is a fibrous material without causing a chemical change in the corresponding battery. For example, olefine-based polymers, such as polyethylene and a polypropylene; a fibrous material such as glass fiber or carbon fiber is used.

When the solvent-free mixture is prepared in this way, the solvent-free mixture is charged into the main body 110 and stored.

After that, the extruder 120 rotates and mills the solvent-free mixture, or mixes the mixture by blending, and applies a shear force to the solvent-free mixture to form a fiberization composition 111.

At this time, the rotation of the extruder 120 can be performed at 10 rpm to 500 rpm for 1 minute to 30 minutes.

Further, the temperature for preparing the fiberization composition can be carried out at 20 to 120 °C, specifically, 40 to 120 °C, more specifically, 60 to 120 °C.

The type of the extruder 120 is not limited, but it may be a screw as an example.

Although the extruder 120 shows a single extruder as one extruder in the drawing, in order to increase mixing efficiency, it is more preferable if a pair of extruders, that is, a twin screw in which two extruders are arranged in parallel meshing with each other, are applied.

A configuration in which PTFE, which is a fibrizable polymer of the binder, is fiberized when subjected to a shear force to bind the active material and the conductive material is known in the art.

After that, the extruder 120 moves in an up-and down-direction of the main body 110, applies pressure to the fiberization composition 111, and extrudes it through a discharge port formed at the lower end of the main body 110.

At this time, the extrusion speed of the fiberization composition 111 may be 100ml/min to 5000ml/min.

The extrusion speed is related to the peripheral speed of the preforming roll, which will be described later.

If the extrusion speed is too low outside the above range, the process time is long which is not efficient. If the extrusion speed is too high, an overload problem may occur in the extruded part, which is not preferable.

The fiberization composition 111 extruded in this way is subjected to the process for manufacturing it as a free-standing film. This process can usually be performed by calendering with a calender, i.e., rolling.

However, according to the present disclosure, by removing the slit guide located below the discharge port formed at the end of the main body 110, that is, the lower end of the main body 110 and positioning the preforming roll 130, the extruder 120 extrudes the fiber-forming composition 111 separately from calendering, and at the same time, can be molded into a film form.

At this time, as the configuration in which the discharge port is formed at the lower end of the main body 110, only the configuration in which the preforming roll 130 is located at the lower part end is shown in the figure, but the main body 110 may be in the form of extruding the fiberization composition 111 to the side surface, wherein the discharge part may be located on the side end of the main body, and the preforming roll 130 may be located on the side surface of the main body 110. Additionally, the extrusion direction may also be in the form of moving the extruder 120 in the left and right directions and extruding the composition.

When applying the preforming roll 130 rather than the slit guide in this way, it is possible to minimize a load applied to the portion where the fiberization composition 111 is extruded from the main body 110. Even if the content of the binder increases and fiberization progresses a lot, it can be easily formed into a film, thereby enabling manufacture of a free-standing film having excellent physical properties.

The diameter of the preforming roll 130 is not limited, but may be 10 to 500 mm, specifically 10 to 300 mm, more specifically 10 to 150 mm.

If the diameter is too small outside the above range, the pressure applied to the fiberization composition 111 is small, which is not preferable, and when the diameter is too large, it is inefficient in terms of space and cost.

The surface temperature of the preforming roll 130 may be, for example, 20 to 120 °C, specifically 40 to 120 °C, more specifically 60 to 120 °C.

If the surface temperature is too low outside the above range, there is a problem that the fiberable polymer is not activated. If the surface temperature is too high, the fiberization of the fiberizable polymer proceeds rapidly, so that the diameter of the fiber becomes thinner, and a part thereof are cut, making it impossible to bind the active material, which causes a problem that the quality of the free-standing film is deteriorated, which is not preferable.

At this time, the peripheral speed of the preforming roll 130 is related to the speed at which the fiberization composition is extruded from the main body and is affected by the desired thickness of the free-standing film. For example, the peripheral speed of the preforming roll 130 may be 10 rpm to 500 rpm.

If the peripheral speed is too fast outside the above range, the fiberization composition may be agglomerated between the preforming roll and the end of the main body, and if the peripheral speed is too slow, the deviation in the thickness of the free-standing film may become large, which is not preferable.

Meanwhile, the process of calendering the fiberizaiton composition 111 molded in the form of a film by the preforming roll 130 as described above may be further included.

That is, in the present disclosure, the fiberization composition 111 may be prepared in the form of a film by the preforming roll 130, thereby manufacturing a free-standing film, but additionally, a calendering process may be further included.

Therefore, although not shown in Fig. 1, the free-standing film manufacturing apparatus according to the present disclosure may further include a calender for performing calendering.

At this time, the calendering may also be performed by a calender roll. At this time, the diameter of the roll may be larger than the diameter of the preforming roll 130 so as to be larger than the pressure applied by the preforming roll 130. Within such a range, for example, it may be 50 to 1000 mm, specifically 100 to 1000 mm, and more specifically 100 to 500 mm.

Further, the surface temperature of the calender roll may be 20 to 200 °C, specifically 40 to 150 °C, and more specifically 60 to 150 °C.

The peripheral speed of the calender roll may be 10 rpm to 500 rpm.

By applying a shear pressure by such a calender roll, a free-standing film can be finally manufactured.

Meanwhile, according to another embodiment of the present disclosure, there is provided a dry electrode in which the free-standing film is laminated on a current collector coated with a primer layer.

Further, specifically, there is provided a dry electrode in which a free-standing film manufactured by using the free-standing film manufacturing apparatus is laminated on a current collector coated with a primer layer.

That is, the dry electrode may have a structure in which a free-standing film is formed on a current collector coated with a primer layer.

The PTFE polymer used for the manufacture of the free-standing film binds the active material and the conductive material through fiberization and can be manufactured in the form of a film. However, since it does not have an adhesive force to the current collector, it is possible to ensure the binding force between the current collector and the free-standing film by using the current collector of the type coated with the primer layer.

The current collector is not particularly limited as long as it has high conductivity without causing a chemical change in the battery. For example, stainless steel, aluminum, nickel, titanium, sintered carbon, and a material formed by surface-treating a surface of aluminum or stainless steel surface with carbon, nickel, titanium, silver, or the like can be used. The current collector may have fine irregularities formed on a surface thereof or may process in a mesh form to enhance the bonding strength of the positive electrode active material, and may be used in various forms such as a film, a sheet, a foil, a net, a porous body, a foaming body, and a non-woven fabric structure.

The primer layer may be wholly or partially coated onto the current collector, and in detail, may be coated wholly.

Such a primer layer may include a conductive material and a binder. The conductive material is not limited as long as it is a conductive material, and for example, it may be a carbon-based material such as carbon black, carbon nanotubes, graphene, or graphite. The binder may include a fluorine-based binder (including PVDF and PVDF copolymer), an acrylic binder, and an aqueous binder that can be dissolved in a solvent.

Binding of the free-standing film and the primer layer-coated current collector may be performed by lamination.

The lamination may also be performed by a lamination roll, wherein the lamination roll may be maintained at a temperature of 80°C to 200°C.

Meanwhile, according to another embodiment of the present disclosure, a secondary battery including the dry electrode is provided.

Specifically, the electrode assembly including the dry electrode, the separator, and the counter electrode may have a structure incorporated into the battery case together with the electrolyte. Since other configurations of the secondary battery are well known in the prior art, a description thereof will be omitted.

Hereinafter, the present disclosure will be described in detail by way of Examples, Comparative Examples, and Experimental Examples so that those skilled in the art can easily understand.

### <Example 1>

97g of LiMn₂O₄ as a positive electrode active material, 1.5g of ketjen black as a conductive material, and 1.5 g of polytetrafluoroethylene (PTFE) as a binder were mixed with a Powder Mixer equipment (KM Tech) at 5°C and 10000rpm for 5 minutes. The slit was removed from the self-made twin screw type extruder with a maximum torque of 150N m. A pair of preforming rolls having a diameter of 100 mm were charged into an extruder formed at the lower end of the extruder, at a temperature of 90 degrees Celsius, under 100 rpm, and the mixture was charged at a rate of 5 g/sec. The mixture was extruded while applying a shear force, and at the same time, rolling by a preforming roll (roll diameter: 100 mm, roll temperature: 100°C, peripheral speed: 100 rpm, roll interval: 400 *µ*m) was performed.

The rolled film was repeatedly charged into a lab calender (roll diameter: 200 mm, roll temperature: 100 °C, 20 rpm) twice, and a free-standing film having a thickness of 200 *µ*m was finally manufactured by adjusting the interval of the rolls.

### <Example 2>

A free-standing film having a thickness of 200 *µ*m was manufactured in the same manner as in Example 1, except that in Example 1, 95.5 g of LiMn₂O₄, 1.5 g of active carbon as a conductive material, and 3.0 g of polytetrafluoroethylene (PTFE) as a binder were mixed with a Powder Mixer equipment (KM Tech) and the mixture was charged into an extruder.

### <Comparative Example 1>

A free-standing film was manufactured in the same manner as in Example 1, except that in Example 1, the T-die slit was used in the extruder in Example 1 and the preforming roll was not used.

### <Comparative Example 2>

In Example 2, a T-die slit was used in the extruder, a mixture of 95.5 g of LiMn₂O₄, 1.5 g of active carbon as a conductive material, and 3.0 g of polytetrafluoroethylene (PTFE) as a binder was charged into an extruder without a preforming roll and subjected to extrusion, but extrusion was not performed, thus making it impossible to manufacture a free-standing film.

### <Comparative Example 3>

95.5 g of LiMn₂O₄ as a positive electrode active material, 1.5 g of active carbon as a conductive material, and 3.0 g of polytetrafluoroethylene (PTFE) as a binder were mixed with a Powder Mixer equipment (KM Tech) at 5°C and 10000rpm for 5 minutes. The mixed mixture was charged into a Twin Screw Kneader (Irie Shokai, PBV-0.1L), and mixed for about 3 minutes at a temperature of 90 degrees Celsius at 100 rpm to prepare a fiberization composition. The fiberizaiton composition was rolled by a roll to manufacture a film having a thickness of 400 *µ*m.

The manufactured film was charged into a lab calender (roll diameter: 200 mm, roll temperature: 100 °C, 20 rpm) to adjust the distance between the rolls to finally manufacture a free-standing film having a thickness of 200 *µ*m.

### <Comparative Example 4>

A free-standing film was manufactured in the same manner as in Comparative Example 3, except that in Comparative Example 3, the mixture was charged into the Twin Screw Kneader and the fiberization composition was prepared at a temperature of 25 degrees Celsius.

### <Comparative Example 5>

A free-standing film was manufactured in the same manner as in Comparative Example 3, except that in Comparative Example 3, the mixture was charged into a Paste Mixer (Thinky, ARE-400) and mixed at a temperature of 25 degrees Celsius at 1000 rpm for about 5 minutes to prepare a fiberization composition.

### <Comparative Example 6>

A free-standing film was manufactured in the same manner as in Comparative Example 3, except that in Comparative Example 3, 95.5 g of LiMn₂O₄ as a positive electrode active material, 1.5 g of active carbon as a conductive material, and 3.0 g of polytetrafluoroethylene (PTFE) as a binder were mixed with a Powder Mixer equipment (KM Tech) at 5°C and 10000 rpm for 5 minutes. After the mixture was re-adjusted to a temperature of 25 degrees Celsius in the same equipment, it was mixed at 10000 rpm for about 5 minutes.

### <Experimental Example 1>

The thickness deviations of the free-standing films of Examples 1 to 2 and Comparative Examples 1 to 6 were measured and shown in Table 1 below.

The thickness deviation was obtained by measuring the thickness of the free-standing film at 20 points at 1 cm intervals using an automatic thickness meter (Mahr, Millimar).

### <Experimental Example 2>

The tensile strengths of the free-standing films of Examples 1 to 2 and Comparative Examples 1 to 6 were measured and shown in Table 1 below.

The tensile strength was determined in which the free-standing film was cut and sampled into a width of 20 mm × length 20 mm × thickness 200 *µ*m, and using the sample, LLOYD's UTM equipment is used to measure the tensile strength.

The tensile strength was determined in which a free-standing film was cut and sampled into width 20mm × length 20mm × thickness 200 *µ*m, and the tensile strength (the maximum value of the force applied up to a time point where the sample does not break) was measured for the sample at an angle of 180 degrees and a speed of 50 mm/min using an UTM equipment (LLOYD Instruments Ltd.).

### <Experimental Example 3>

The free-standing films of Examples 1 to 2 and Comparative Examples 1 to 6 were placed on one side of an aluminum foil (20 *µ*m, Primer Coated Al Foil, Dongwon Systems) coated with a primer layer mixed with carbon black: PVDF binder, and an electrode was prepared by lamination through a lamination roll maintained at 120°C.

The electrode and lithium metal was used as a counter electrode, and an electrolyte solution containing 1 M LiPF₆ in a solvent of EC : DMC : DEC = 1 : 2 : 1 was used to manufacture a coin-type half-cell.

The coin-type half-cell manufactured above was charged and discharged 100 times under the current condition of 0.33 C-rate in the voltage range of 3.0 to 4.30V at 25°C, and then the 100-time capacity retention rate relative to the one-time discharge capacity was calculated, and the results are shown in Table 1 below.

**[Table 1]**

| | Thickness deviation of free-standing film (%) | Tensile strength of free-standing film (gf/cm²) | Life characteristic (100^{th} cycle) |
|---|---|---|---|
| Example 1 | 0.2 | 2335 | 95.4 |
| Example 2 | 0.3 | 2502 | 96.9 |
| Comparative Example 1 | 0.3 | 1930 | 95.1 |
| Comparative Example 2 | Extrusion X | - | - |
| Comparative Example 3 | 13.4 | 1957 | 94.3 |
| Comparative Example 4 | 11.6 | 1884 | 92.8 |
| Comparative Example 5 | 7.2 | 1765 | 91.2 |
| Comparative Example 6 | 5.8 | 1681 | 89.5 |

Referring to Table 1, it can be confirmed that when manufactured using the device according to the present disclosure, not only the thickness deviation of the free-standing film is also small, but also the tensile strength and life characteristics are excellent.

However, when an extruder having a T-die slit formed therein is used, the configuration is not so problematic when the content of the binder is small. Nevertheless, it is more preferable to use the configuration of the present disclosure in terms of thickness variations or, particularly the tensile strength and life characteristics. This is considered to be because the non-uniformity of the supply amount is eliminated by the quantitative extrusion of the extruder, and at the same time, the load on the extrusion site is small, so that the thickness deviation does not appear further.

On the other hand, if the content of the binder increases and fiberization progresses a lot, it can be confirmed that when an extruder having a T-die slit formed therein is used, the load is increased at the extrusion site and extrusion is not performed, which is not preferable.

On the other hand, in the case of simple rolling using a kneader other than the extruder, it can be confirmed that even if the mixing time is increased or the temperature is increased, it is not easy to increase the uniformity of the electrode mixture for PTFE fiberization, and as a result, the thickness deviation of the electrode becomes severe, and the tensile strength and life characteristics are also deteriorated.

On the other hand, the free-standing film and the dry electrode proposed through the present disclosure can maintain the electrode quality uniformly, thereby obtaining the effect of excellent tensile strength and capacity retention while reducing the thickness deviation of the electrode.

### [industrial Applicability]

According to the present disclosure, an extruder is applied as an apparatus for manufacturing a free-standing film, thereby enabling uniform quantitative feeding.

Further, by removing the slit guide and applying the preforming roll to the part where the fiberization composition is discharged by the conventional extrusion, it is possible to manufacture a free-standing film with a uniform density and improved tensile strength and life characteristics while minimizing the load on the discharge part.

## Claims

1. A free-standing film for dry electrode, comprising:
a binder, an active material and a conductive material,
wherein the free-standing film has a tensile strength of 2000 gf/cm² or more based on a thickness of 200 *µ*m.

2. The free-standing film according to claim 1, wherein:
the binder comprises a fiberizable polymer, and the fiberizable polymer is polytetrafluoroethylene (PTFE).

3. The free-standing film according to claim 1, wherein:
the free-standing film has a tensile strength of 2000 gf/cm² to 4000 gf/cm² based on a thickness of 200 *µ*m.

4. The free-standing film according to claim 1, wherein:
the free-standing film has a thickness deviation of 0.5% or less based on a thickness of 200 *µ*m.

5. The free-standing film according to claim 1, wherein:
the free-standing film has a thickness of 10 to 1000 *µ*m.

6. An apparatus for manufacturing the free-standing film as set forth in claim 1, the apparatus comprising:
a main body that stores a solvent-free mixture containing a binder, an active material and a conductive material,
at least one extruder that mixes the solvent-free mixture to prepare a fiberization composition and extrudes it from the main body, and
a pair of preforming rolls that rotate in opposite directions in a state of facing each other and discharges the fiberization composition.

7. The free-standing film manufacturing apparatus according to claim 6, wherein:
the binder comprises a fiberizable polymer, and the fiberizable polymer is polytetrafluoroethylene (PTFE).

8. The free-standing film manufacturing apparatus according to claim 6, wherein:
the extruder performs milling by rotation or mixing by blending, and to apply a shear force to the solvent-free mixture to prepare a fiberization composition.

9. The free-standing film manufacturing apparatus according to claim 6, wherein:
the main body has a discharge port formed at a lower end, and the extruder moves in an up-and down-direction of the main body and to extrude the fiberization composition through a discharge port by pressure.

10. The free-standing film manufacturing apparatus according to claim 6, wherein:
the extruder is a screw.

11. The free-standing film manufacturing apparatus according to claim 6, wherein:
the preforming roll is located at an end of the main body.

12. The free-standing film manufacturing apparatus according to claim 6, wherein:
the main body has a discharge port formed at a lower end, and the preforming roll is located below the discharge port of the main body, so that the extruder is adapted to extrude the fiberization composition and simultaneously forms it in a film form.

13. The free-standing film manufacturing apparatus according to claim 6, wherein:
the free-standing film manufacturing apparatus further comprises a pre-mixer for mixing the binder, the active material, and the conductive material to form a solvent-free mixture, and a calender for calendering the fiberization composition molded in the form of a film by the preforming roll.

14. A dry electrode in which the free-standing film as set forth in any one of claims 1 to 5 is laminated on a current collector coated with a primer layer.

15. A dry electrode in which a free-standing film manufactured using the free-standing film manufacturing apparatus as set forth in any one of claims 6 to 13 is laminated on the current collector coated with a primer layer.

16. A secondary battery comprising the dry electrode as set forth in claim 14.
